# EUROPÄISCHE PATENTANMELDUNG

(11) **EP 1 428 422 A1**
(43) Veröffentlichungstag der Anmeldung: **16.06.2004**
(21) Anmeldenummer: 03027599.4
(22) Anmeldetag: 02.12.2003
(51) Int. Cl.: A01D 34/52, A01D 34/53

(54) **Mähwerk**

(30) Priorität: 05.12.2002 DE 10256788
(71) Anmelder: Scheppach, Fritz, Dipl.-Ing. (FH), 89335 Ichenhausen (DE)
(72) Erfinder: Scheppach, Fritz, Dipl.-Ing. (FH), 89335 Ichenhausen (DE)
(74) Vertreter: Munk, Ludwig, Dipl.-Ing.

(57) **Zusammenfassung**

Bei einem Mähwerk, insbesondere für einen Rasenmäher, mit einer liegend angeordneten, in Umfangsrichtung antreibbaren Messerspindel 9, die mit einem stationären Gegenmesser (10) zusammenwirkt, lassen sich dadurch eine geräuscharme Arbeitsweise und hohe Funktionssicherheit erreichen, dass die Messerspindel (9) mit mehreren, auf einer antreibbaren Welle (13) aufnehmbaren, gegenüber einer zur Wellenachse radialen Ebene gekippt angeordneten Wankmesserscheiben (17) oder mehrfach umlaufenden Messerwendeln versehen ist.

## Beschreibung

Die Erfindung betrifft ein Mähwerk, insbesondere für einen Rasenmäher, mit einer liegend angeordneten, in Umfangsrichtung antreibbaren Messerspindel, die mit einem über ihre Arbeitsbreite durchgehenden, stationären Gegenmesser zusammenwirkt.

Bei den bekannten Anordnungen dieser Art ist die Messerspindel mit auf radialen Abstandshaltern aufgenommenen, über ihre Arbeitsbreite durchgehenden, flügelartigen Messerleisten versehen, die gegenüber einer zur Achse parallelen Mantellinie schräg gestellt bzw. mit hoher Steigung gewunden sind. Bei höheren Drehzahlen der Messerspindel wirken die Messerleisten wie die Flügel eines Lüfterrads. Hierdurch wird ein vergleichsweise starker Wind erzeugt, der das zu mähende Gras umdrückt und der Wirkung der Messer entzieht. Um dies zu vermeiden kann die Messerspindel der bekannten Anordnungen nur mit vergleichsweise kleiner Geschwindigkeit angetrieben werden. Zur Erzielung eines zuverlässigen Schnitts bei akzeptablen Drehzahlen muss das Gegenmesser daher praktisch auf Berührung mit den Messerleisten der rotierenden Messerspindel eingestellt werden. Dies führt jedoch zu einer hohen Geräuschentwicklung, was unerwünscht ist. Im Falle einer berührungslosen Einstellung des Gegenmessers gegenüber den Messerleisten der Messerspindel müsste die Drehzahl stark erhöht werden. Die Folge davon wäre jedoch die oben erwähnte Winderzeugung, wobei die gewünschte Funktionssicherheit nicht gewährleistet wäre.

Hiervon ausgehend ist es daher die Aufgabe der vorliegenden Erfindung, ein Mähwerk eingangs erwähnter Art zu schaffen, das vergleichsweise geräuscharm arbeitet und dennoch eine hohe Funktionssicherheit aufweist.

Diese Aufgabe wird gemäß einem ersten Erfindungsgedanken dadurch gelöst, dass die Messerspindel mit mehreren, auf einer antreibbaren Welle aufnehmbaren, gegenüber einer zur Wellenachse radialen Ebene gekippt angeordneten Wankmesserscheiben versehen ist.

Eine nebengeordnete Lösung obiger Aufgabe besteht darin, dass die Messerspindel mit wenigstens einem umfangsseitigen, als Messerwendel ausgebildeten Schneidwerkzeug versehen ist, wobei die Steigung der Messerwendel kleiner als die Arbeitsbreite der Messerspindel ist und über der Arbeitsbreite der Messerspindel mehrere Wendelumläufe vorgesehen sind.

Mit diesen Maßnahmen werden flügelartige Messerleisten und die hiermit verbundenen Nachteile in vorteilhafter Weise vollständig vermieden. Der geringe Neigungswinkel der erfindungsgemäßen Schneidwerkzeuge gegenüber der Spindelachse ergibt in vorteilhafter Weise wenig Winderzeugung, so dass vergleichsweise hohe Drehzahlen der Messerspindel möglich sind, ohne dass das Schneidgut durch den erzeugten Wind umgedrückt würde. Je höher aber die Drehzahlen der Messerspindel sind, um so größer darf auch der Abstand des stationären Gegenmessers von den rotierenden Werkzeugen sein, ohne dass die Funktionsfähigkeit beeinträchtigt würde. Die erfindungsgemäßen Maßnahmen ermöglichen daher in vorteilhafter Weise eine berührungsfreie Einstellung des stationären Gegenmessers gegenüber den rotierenden Schneidwerkzeugen und gewährleisten damit einen vergleichsweise geräuscharmen Betrieb. Die erfindungsgemäßen Schneidwerkzeuge stellen in vorteilhafter auch vergleichsweise massive Bauteile dar, die schwingungssicher sind und nicht zu Vibrationen etc. neigen. Es kann daher in vorteilhafter Weise auch Problemschnittgut in Form harter Stengel, Schilfgräser etc. zuverlässig geschnitten werden. Ein weiterer Vorteil besteht darin, dass die erfindungsgemäßen Wankmesserscheiben bzw. Messerwendeln zum Schärfen einfach umfangsseitig überschliffen werden können.

Vorteilhafte Ausgestaltungen und zweckmäßige Fortbildungen der übergeordneten Maßnahmen sind in den Unteransprüchen angegeben. So kann die Messerspindel zweckmäßig eine zu ihrer Mitte symmetrische Wankmesserscheibenanordnung bzw. Messerwendelanordnung aufweisen. Hierdurch ergibt sich ein zuverlässiger Ausgleich von in axialer Richtung wirkenden Massenkräften, so dass auch bei vergleichsweise hohen Drehzahlen der Messerspindel eine große Laufruhe gewährleistet ist.

Eine weitere zweckmäßige Maßnahme kann darin bestehen, dass der axiale Abstand einander benachbarter Wankmesserscheiben auf der Welle kleiner, vorzugsweise zumindest um die Scheibendicke kleiner als die ihre Projektion auf die Spindelachse ist. Auf diese Weise ergibt sich eine axiale Überschneidung der Wirkbereiche benachbarter Wankmesserscheiben, wodurch auch bei ungünstigen Verhältnissen ein sauberes Mähergebnis erreicht wird. Die genannte axiale Überschneidung ist selbstverständlich auch bei einander benachbarten Messerwendeln zweckmäßig.

In weiterer Fortbildung der übergeordneten Maßnahmen können die einander benachbarten Wankmesserscheiben jeweils um 90° gegeneinander verdreht sein. Auch dies wirkt sich vorteilhaft auf die Laufruhe aus.

Eine besonders vorteilhafte Maßnahme kann darin bestehen, dass die Wankmesserscheiben bzw. Messerwendeln mit umfangsseitigen Schneidzähnen versehen sind. Diese führen in vorteilhafter Weise zu vergleichsweise geringen Schnittkräften und damit zu einem geringen Energieverbrauch. Bei Rasenmähern mit Bodenantrieb wird so eine hohe Bedienungsfreundlichkeit gewährleistet. Bei Rasenmähern mit Motorantrieb ergibt sich in vorteilhafter Weise eine hohe Flächenleistung pro Tankfüllung bzw. Batterieladung.

Die Schneidzähne können vorteilhaft als durch umfangsseitige, gegenüber einer Radialen geneigte Einschnitte hergestellte Zungen ausgebildet sein, die gegenüber der Ebene des zugeordneten Werkzeugs geschränkt sind. Bei dieser Ausführung ergibt sich eine zuverlässige seitlich Abstützung des Schnittguts, so dass dieses vor dem Schnitt nicht seitlich ausweichen kann.

Eine andere Ausbildung kann darin bestehen, dass die erfindungsgemäßen Werkzeuge zur Bildung der Schneidzähne mit umfangsseitig offenen, gegenüber der Öffnung kontinuierlich nach innen sich erweiternden Ausnehmungen versehen sind. Hierbei ergeben sich die umfangsseitige Öffnung jeder Ausnehmung flankierende, in einer feinen Schneide auslaufende Schneidzähe. Da jeweils nur die Schneidzähne einer Seite benutzt werden, lässt sich durch Wenden der Werkzeuge eine Verlängerung des Intervalls zwischen zwei erforderlichen Schärfvorgängen erreichen.

Vorteilhaft können die Wankmesserscheiben jeweils zwischen einander gegenüberliegenden, auf der Welle aufnehmbaren Stützringen aufnehmbar sein, deren Stirnseiten entsprechend der Neigung der zugeordneten Wankmesserscheibe abgeschrägt sind. Dies ergibt eine einfache und zuverlässige Positionierung der Wankmesserscheiben auf der zugeordneten Welle.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine schematische Darstellung eines erfindungsgemäßen Rasenmähers im Längsschnitt,
- Figur 2: eine entgegen der Fahrtrichtung gesehene Ansicht des Mähwerks der Anordnung gemäß Figur 1,
- Figur 3: eine Ansicht einer mit geschränkten Zähnen versehenen Wankmesserscheibe,
- Figur 4: einen Längsschnitt durch die Anordnung gemäß Figur 3,
- Figur 5: eine Teilansicht einer mit durch umfangsseitige Ausnehmungen gebildeten Schneidzähnen versehenen Wankmesserscheibe und
- Figur 6: einen Längsschnitt durch den radial inneren Bereich der Anordnung gemäß Figur 5 in gegenüber dieser vergrößertem Maßstab.

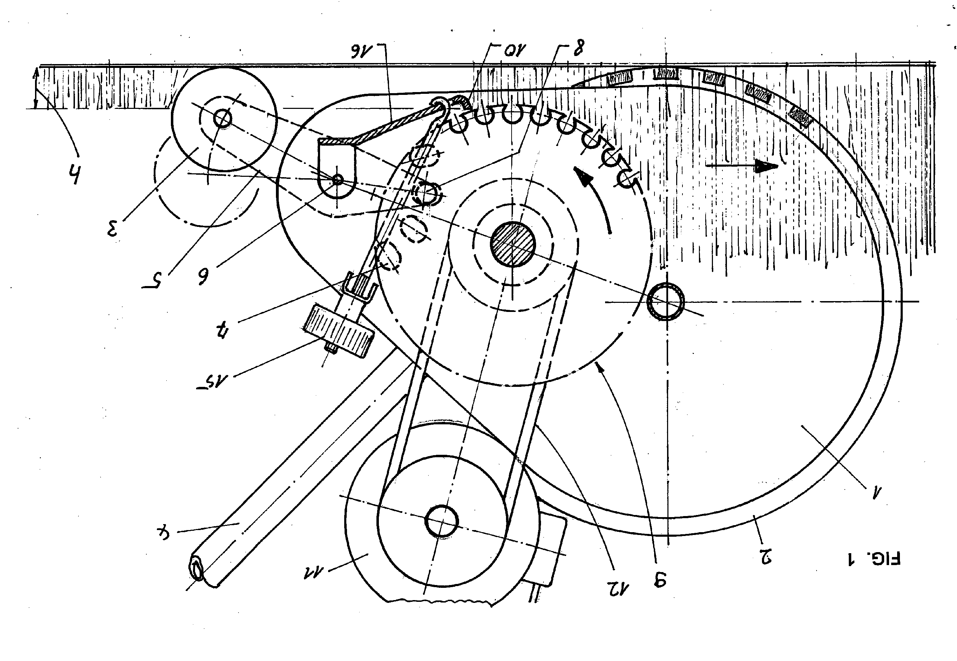

Der der Figur 1 zugrundeliegende Rasenmäher besitzt ein fahrbares Maschinengestell 1, das auf vorderen Rädern 2 und hinteren Rädern 3 aufgenommen und mittels einer Schubdeichsel 4 manövrierbar ist, wie durch einen Vorwärtspfeil angedeutet ist. Die einen vergleichsweise großen Durchmesser aufweisenden Vorderräder 2 sind auf einer stationären Achse des Maschinengestells 1 aufgenommen. Die einen vergleichsweise kleinen Durchmesser aufweisenden Hinterräder 3 sind auf einem Schwenkbügel 5 aufgenommen, der schwenkbar am Maschinengestell 1 aufgehängt und gegenüber diesem in unterschiedlichen Positionen fixierbar ist. Hierzu ist das Maschinengestell 1 mit einer zur Schwenkachse 6 des Bügels 5 konzentrischen Lochreihe 7 versehen. Dem Bügel 5 ist ein Rastbolzen 8 zugeordnet, der in das jeweils gewünschte Loch der Lochreihe 7 einrastbar ist. Durch Veränderung der Position der Hinterräder 3 kann das Maschinengestell 1 abgesenkt bzw. angehoben werden, um die bei h angedeutete Schnitthöhe einzustellen.

Auf dem Maschinengestell 1 ist ein im Bereich zwischen den Vorderrädern 2 und Hinterrädern 3 angeordnetes Mähwerk aufgenommen, das eine liegend angeordnete, in Umfangsrichtung antreibbare Messerspindel 9 und ein hiermit zusammenwirkendes, über die Arbeitsbreite der Messerspindel 9 durchgehendes, stationäres Gegenmesser 10 aufweist. Die durch einen Drehpfeil angedeutete Drehrichtung der Messerspindel 9 ist so, dass deren unterer Umfangsbereich mit zur Fahrtrichtung gegenläufiger Richtung am stationären Gegenmesser 10 vorbeiläuft.

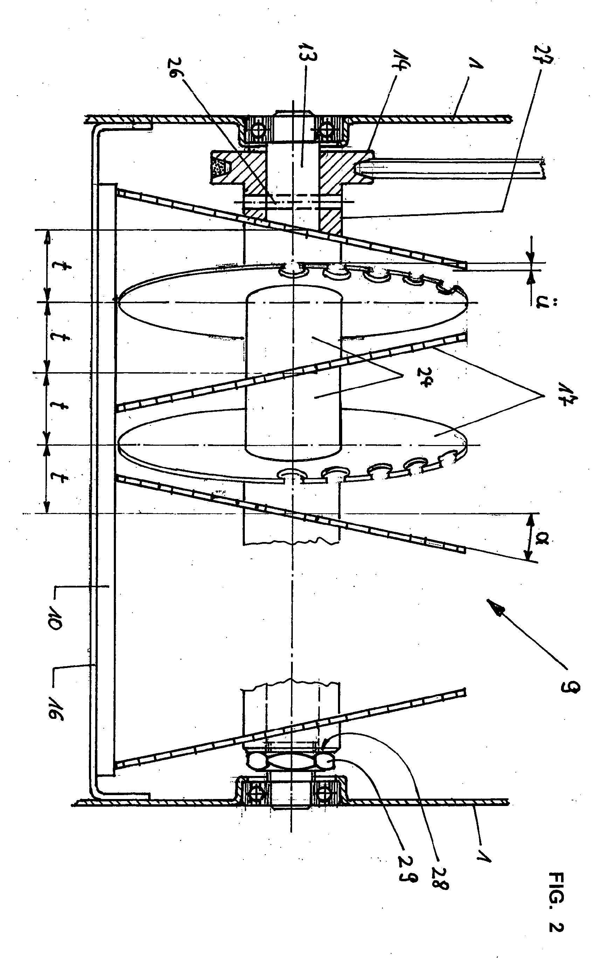

Der Antrieb der Messerspindel 9 kann von den auf dem Boden sich abrollenden Hinterrädern 2 abgeleitet sein. Im dargestellten Beispiel ist ein auf dem Maschinengestell 1 aufgenommener Antriebsmotor 11 vorgesehen, der über ein Vorgelege 12, bei dem es sich um einen Riementrieb, beispielsweise in Form eines Keilriementriebs, handeln kann, die Messerspindel 9 antreibt. Diese besitzet, wie aus Figur 2 hervorgeht, eine in den Seitenwänden des Maschinengestells 1 gelagerte Welle 13, die im Bereich eines Endes mit einem Antriebsrad 14 drehschlüssig verbunden ist. Der Antriebsmotor 10 kann ein Verbrennungsmotor oder ein Elektromotor sein. Dabei kann es sich um einen netzgespeisten Elektromotor oder um einen batteriegespeisten Elektromotor handeln. Im letzteren Fall enthält das Maschinengestell 1 selbstverständlich auch eine Einrichtung zur Aufnahme der dem Motor zugeordneten Batterie.

Das im Betrieb stationäre Gegenmesser 10 ist als über die Arbeitsbreite der Messerspindel 9 durchgehende Leiste ausgebildet, deren Abstand zum Umfang der Messerspindel 9 mittels einer Stelleinrichtung 15 einstellbar ist, wie aus Figur 1 ersichtlich ist. Im dargestellten Beispiel wird das Gegenmesser 10 durch eine Randabwinklung eines Blechs 16 gebildet, das um eine spindelparallele Achse schwenkbar am Maschinengestell 1 gelagert und mittels der Stelleinrichtung 15 gegenüber der Messerspindel 9 schwenkbar ist. Die genannte Schwenkachse ist hier identisch mit der Schwenkachse 6 des Bügels 5, was baulich einfach aber nicht notwendig ist.

Die Messerspindel 9 ist, wie Figur 2 weiter zeigt, mit auf der Welle 13 aufgenommenen, bezüglich der Spindelachse mit so geringer Steigung umlaufenden Werkzeugen versehen, dass über der Arbeitsbreite der Spindel mehrere Werkzeugumläufe vorgesehen sind. Die Werkzeuge können als schrauben- bzw. schneckenförmige Messerwendeln ausgebildet sein, deren Steigung wesentlich kleiner als die Arbeitsbreite der Messerspindel 9 ist, beispielsweise 1/10 dieser Arbeitsbreite beträgt.

Bei dem der Figur 2 zugrundeliegenden Ausführungsbeispiel sind die Werkzeuge als auf der Welle 13 aufgenommene, gegenüber einer Radialebene unter einem geringen Winkel gekippt angeordnete Wankmesserscheiben 17 ausgebildet. Über der Arbeitsbreite der Messerspindel 9 sind mehrere Wankmesserscheiben 17, beispielsweise zehn, vorgesehen. Die Wankmesserscheiben 17 wanken in Folge ihrer gekippten Anordnung hin und her, das heißt der Umfang der Wankmesserscheiben 17 beschreibt am stationären Gegenmesser 10 einen in axialer Richtung hin- und hergehenden Weg.

Der Kippwinkel α der Wankmesserscheiben 17 liegt zweckmäßig im Bereich zwischen 10 ° bis 15 ° und beträgt vorzugsweise 12 °. Der axiale Abstand t einander benachbarter Wankmesserscheiben 17 ist zweckmäßig kleiner als ihre Projektion auf die Achse, so dass sich eine Überschneidung ü der hin- und hergehenden Wege benachbarter Wankmesserscheiben 17 im Bereich des Gegenmessers 10 ergibt. Diese Überschneidung ü kann etwa der Dicke der Wankmesserscheiben 17 entsprechen. Der Durchmesser der Wankmesserscheiben 17 entspricht etwa dem 5-fachen Abstand t, was trotz des oben erwähnten, vergleichsweise geringen Kippwinkels eine ausreichend große Arbeitsbreite ergibt.

Bei der der Figur 2 zugrundeliegenden Ausführung sind einander jeweils benachbarte Wankmesserscheiben 17 um 90 ° gegeneinander verdreht angeordnet. Die im Bereich des Gegenmessers 10 ausgeführten hin- und hergehenden Bewegungen sind daher entsprechend gegeneinander versetzt, was einen ruhigen Lauf ergibt. Selbstverständlich kann auch ein anderer Versetzungswinkel vorgesehen sein. Bei einer Versetzung um 90° ergibt sich jeweils im Abstand von zwei Wankmesserscheiben 17 ein gegenseitiger Winkelversatz von 180°, wodurch die axiale Unwucht ausgeglichen wird. So ergeben jeweils zwei eine andere Wankmesserscheibe 17 zwischen sich aufnehmende Wankmesserscheiben 17, ein ihre axiale Unwucht gegenseitig ausgleichendes Scheibenpaar. Im Abstand von vier Wankmesserscheiben 17 ergeben sich parallele Scheiben. Vier Wankmesserscheiben 17 bilden dabei praktisch einen Scheibensatz, dessen erste und dritte sowie zweite und vierte Wankmesserscheibe 17 sich bezüglich ihrer axialen Unwucht gegenseitig ausgleichen, so dass der ganze Scheibensatz ausgeglichen ist. Dieser kann vormontiert und so bereitgehalten werden. Zur Vermeidung hin- und hergehender Massenkräfte über der ganzen Arbeitsbreite ist zweckmäßig eine zur Mitte der Messerspindel 9 symmetrische Wankmesserscheibenanordnung vorgesehen. Dies gilt selbstverständlich auch für den Fall der Verwendung von Messerwendeln.

Die Schneidwerkzeuge der Messerspindel 9 in Form der Wankmesserscheiben 17 bzw. nicht näher dargestellten Messerwendeln sind mit umfangsseitigen Schneidzähnen versehen, die zweckmäßig so ausgebildet sind, dass sich beim Zusammenwirken mit dem stationären Gegenmesser 9 ein positiver Schnittwinkel ergibt. Die Anzahl der Schneidzähe am Umfang entspricht zumindest der Projektion des betreffenden Schneidwerkzeugs auf die Achse geteilt durch die Materialstärke, so dass die Länge des im Bereich des stationären Gegenmessers ausgeführten, hin- und hergehenden Wegs lückenlos mit Schneidzähnen besetzt ist.

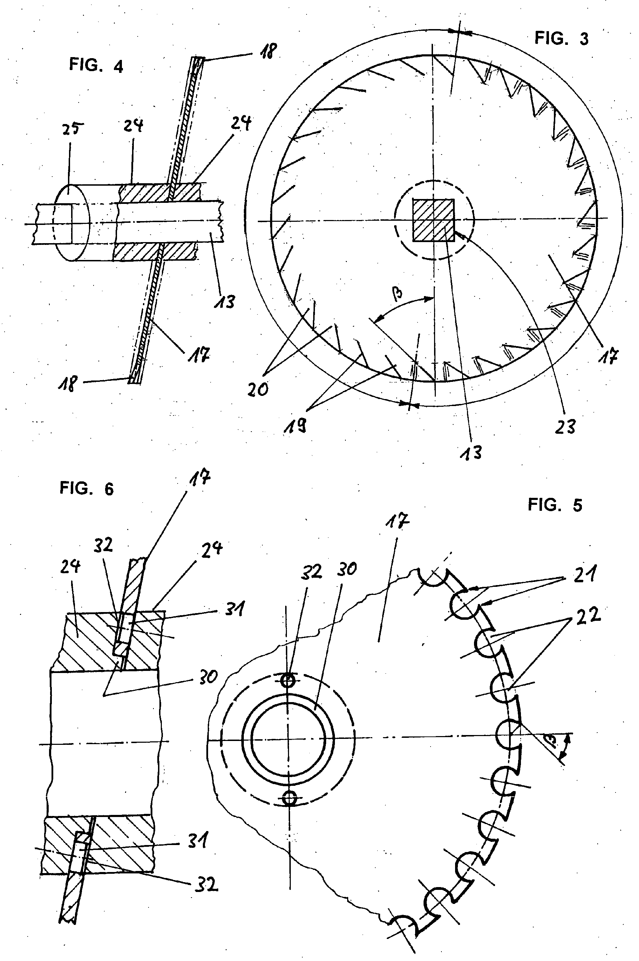

Bei der den Figuren 3 und 4 zugrundeliegenden Ausführung sind aus der Ebene der zugeordneten Wankmesserscheibe 17 seitlich herausgebogene Schneidzähne 18 vorgesehen. Diese werden durch entsprechende Schränkung von durch umfangsseitige Schnitte 19 begrenzten, umfangsseitigen Zungen 20 gebildet. Die Schnitte 19 verlaufen dabei nicht radial, sondern gegenüber einer Radialen geneigt, wodurch sich der in Figur 3 angedeutete, positive Schnittwinkel β ergibt. Das Schrankmaß, das heißt die maximale seitliche Auslenkung der Schneidzähne 18 gegenüber der Ebene der zugeordneten Wankmesserscheibe 17 entspricht höchstens der Materialdicke und beträgt vorzugsweise 80% der Wandstärke der zugehörigen Wankmesserscheibe 17.

Die Schneidzähne 18 sollen sich im Verlauf der im Bereich des stationären Gegenmessers 10 stattfindenden hin- und hergehenden Bewegung immer in Bewegungsrichtung vorne befinden, so dass das Schneidgut durch die Wankmesserscheibe 17 seitlich gestützt wird. Da eine hin- und hergehende Bewegung stattfindet, müssen die Schneidzähe 18 im Bereich der nach links sich bewegenden Umfangshälfte nach links und im Bereich der nach rechts sich bewegenden Umfangshälfte nach rechts geschränkt sein, wie die Figuren 3 und 4 anschaulich erkennen lassen.

Bei der Ausführung gemäß Figur 5, die auch den Figuren 1 und 2 zugrundeliegt, sind die Wankmesserscheiben 17 zur Bildung umfangsseitiger Schneidzähne 21 mit im Bereich ihres Umfangs vorgesehenen, umfangsseitig offenen, gegenüber der umfangsseitigen Öffnung nach innen kontinuierlich sich erweiternden, also hinterschnittenen Umfangsausnehmungen 22 versehen. Diese besitzen im dargestellten Beispiel eine kreisabschnittförmige Kontur, was eine einfache Herstellung durch Bohren oder Stanzen ermöglicht. Aufgrund der geschilderten Hinterschneidung werden die umfangsseitigen Öffnungen der Umfangsausnehmungen 22 durch spitz auslaufende, die Schneidzähne 21 bildende Materialbereiche begrenzt. Die den Umfangsausnehmungen 22 zugrundeliegende Kreisabschnittkontur umfasst dabei mehr als eine Kreishälfte, so dass sich ein vergleichsweise kleiner Keilwinkel der Schneidzähne 21 und ein positiver Schnittwinkel β ergibt, wie aus Figur 5 anschaulich erkennbar ist.

Im Betrieb schneiden jeweils die in Drehrichtung hinteren, mit ihrer Schneide nach vorne weisenden der durch die Umfangsausnehmungen 22 gebildeten Schneidzähne 21. Sobald diese stumpf sind, kann die betreffende Wankmesserscheibe 17 einfach um eine zu ihrer Ebene parallele Achse um 180 ° gewendet werden, wodurch dann die den stumpfen Schneidzähnen 21 gegenüberliegenden Schneidzähne 21 zum Einsatz kommen. Durch Wenden der Wankmesserscheiben 17 lassen sich daher die Wartungsintervalle zwischen zwei notwendigen Schärfvorgängen um das Doppelte verlängern. Zum Schärfen der Schneidzähne 21 werden die Wankmesserscheiben 17 einfach umfangsseitig überschliffen. Dies gilt ersichtlich aus für das Schärfen der geschränkten Schneidzähne 18 gemäß Figuren 3 und 4.

Die Schneidzähne 18 bzw. 21 mit dem vergleichsweise kleinen Schnittwinkel β führen zu vergleichsweise geringen Schnittkräften. Es ist daher in vorteilhafter Weise möglich, auch Problemgut, wie harte Stengel, kleine Äste und dergleichen ohne Antriebsüberlastung zuverlässig zu schneiden. Dies wird dadurch noch begünstigt, dass die Wankmesserscheiben 17 massive, gegen Schwingungen bzw. Vibrationen stabile Bauteile darstellen. Dies gilt natürlich auch für die oben erwähnten Messerwendeln.

Die vorgesehenen Schneidwerkzeuge in Form der Wankmesserscheiben 17 bzw. Messerwendeln können jeweils mit einer Nabe versehen sein, die auf der Welle 13 der Messerspindel 9 aufnehmbar ist und durch ihre Länge den gegenseitigen Abstand benachbarter Werkzeuge vorgibt. Dem in den Figuren 3 und 4 gezeigten Beispiel liegt eine nabenlose Wankmesserscheibe 17 zugrunde, die mit einer zentralen Ausnehmung 23 direkt auf der Welle 13 aufgenommen ist. Die Welle 13 besitzt hier einen quadratischen Querschnitt. Dieser von einer Kreisform abweichende Querschnitt ist symmetrisch zu den durch seinen Mittelpunkt gelegten Koordinatenachsen. Der Querschnitt der zentralen Ausnehmung 23 der Wankmesserscheiben 17 ist so gewählt, dass sich in der aus Figur 4 ersichtlichen gekippten Anordnung der Wankmesserscheiben 17 ein passender Sitz auf der Welle 13 ergibt.

Im dargestellten Beispiel besitzen die Wankmesserscheiben 17 dementsprechend eine zentrale Ausnehmung 23 mit rechteckförmigen Querschnitt, dessen kleinere Kantenlänge der Kantenlänge des Wellenquerschnitts entspricht und dessen größere Kantenlänge dem Bruch aus Kantenlänge des Wellenquerschnitts geteilt durch cosinus α entspricht. Die Anpassung des Querschnitts der zentralen, scheibenseitigen Ausnehmung 23 an den nicht runden Wellenquerschnitt ergibt eine formschlüssige und damit drehschlüssige Verbindung zwischen Wankmesserscheiben 17 und Welle 13. Aufgrund der oben erwähnten Symmetrie des Wellenquerschnitts können die Wankmesserscheiben 17 jeweils um 90 ° gegeneinander verdreht werden, wodurch sich die aus Figur 2 ersichtliche Anordnung mit jeweils um 90 ° gegeneinander verdrehten, einander benachbarten Wankmesserscheiben 17 ergib.

Zur Beabstandung einander benachbarter Wankmesserscheiben 17 sind hier auf die Welle 13 aufschiebbare Stützringe 24 vorgesehen. Die Wankmesserscheiben 17 liegen dabei, wie aus Figur 4 ersichtlich ist, an den einander zugewandten Stirnseiten benachbarter Stützringe 24 an. Die Stirnseiten 25 der Stützringe 24 sind daher entsprechend der gewünschten Neigung der Wankmesserscheiben 17, hier um den Winkel α gegenüber einer Radialebene geneigt. Sofern einander benachbarte Wankmesserscheiben 17, wie bei dem der Figur 2 zugrundeliegenden Beispiel um 90 ° gegeneinander verdreht sein sollen, sind auch die beiden Stirnflächen 25 jedes Stützring 24 um diesen Winkel gegeneinander verdreht, wie aus Figur 4 anschaulich erkennbar ist. Die äußersten Stützringe können, wie aus Figur 2 ersichtlich ist, als durch einen Querstift 26 auf der Welle 13 befestigter Kragen 27 des Antriebsrads 14 ausgebildet sein bzw. mit einer Stützfläche 28 für eine auf ein wellenseitiges Gewinde aufschraubbare Mutter 29 versehen sein, durch die die ganze Wankmesserscheibenanordnung an den Kragen 27 anstellbar ist.

Bei dem den Figuren 5 und 6 zugrundeliegenden Beispiel sind die Wankmesserscheiben 17 nicht nur zwischen zwei Stützringe 24 eingespannt, sondern hierauf aufgenommen und drehschlüssig hiermit verbunden. Die Stützringe 24 sind dabei im Bereich einer Stirnseite mit einem nach Art einer Nabe in eine zentrale Ausnehmung der Wankmesserscheiben 17 eingreifenden Bund 30 versehen, wodurch eine Zentrierung erreicht wird. Die jeweils gegenüberliegende Stirnfläche kann als ebene, bundlose Anpressfläche ausgebildet sein. Die Stützringe 24 sind im Bereich ihrer einander zugewandten Stirnflächen mit zur jeweils gegenüberliegenden Stirnfläche hin vorspringenden, um 180 ° gegeneinander versetzten Mitnehmerzapfen 31 versehen, die in eine jeweils zugeordnete Bohrung 32 der aufzunehmenden Wankmesserscheibe 17 eingreifen. Auf diese Weise ergibt sich eine drehschlüssige Verbindung der Wankmesserscheiben 17 mit beiden sie jeweils flankierenden Stützringen 24 und dementsprechend auch eine drehschlüssige Verbindung der aufeinanderfolgenden Stützringe 24 miteinander.

Aufgrund dieser drehschlüssigen Kupplung sämtlicher aufeinanderfolgender Stützringe 24 miteinander und mit den zwischen ihnen jeweils aufgenommenen Wankmesserscheiben 17 genügt es, wenn nur ein Stützring, beispielsweise ein äußerer Stützring in Form des aus Figur 2 ersichtlichen Kragens 27 des Antriebsrad 14 drehschlüssig mit der Welle 13 verbunden ist. Diese kann dabei in vorteilhafter Weise auch einen Kreisquerschnitt aufweisen. Durch die Spannmutter 29 werden die Mitnehmerbolzen 31 im Eingriff mit den Bohrungen 32 gehalten. Bezüglich der Neigung und Drehstellung der Stirnflächen 25 gilt natürlich dasselbe wie oben. Infolge der formschlüssigen Verbindung der Wankmesser 17 mit den sie flankierenden Stützringen 24 ist eine einfache Vormontage der über die ganze Arbeitsbreite der Messerspindel 9 sich erstreckenden Wankmesserscheibenanordnung als Baugruppe möglich.

Die Messerspindel 9 wird mit vergleichsweise hoher Drehzahl von 2.000 bis 3.000, vorzugsweise 2.500 U/Min angetrieben. Damit liegt die Drehzahl weit oberhalb der Drehzahl bekannter Spindelmäher und nähert sich der Drehzahl der bekannten Sichelmäher. Das stationäre Gegenmesser 10 kann dabei mittels der Stelleinrichtung 15 so eingestellt werden, dass sich keine direkte Berührung mit dem Umfang der Messerspindel 9 ergibt. Dennoch scheren die Werkzeuge hier in Form der Wankmesserscheiben 17 das in Figur 1 links dargestellte, hohe Gras auf der durch die Einstellung der hinteren Räder 3 eingestellten Schnitthöhe h zuverlässig. ab. Das abgescherte Gras wird durch die Wankmesserscheiben 17 nach hinten ausgeworfen, wobei das das stationäre Gegenmesser 10 enthaltende Blech 16 als Leitblech dienen kann.

Die vorstehend beschriebenen Figuren zeigen zwar bevorzugte Ausführungsbeispiele der Erfindung, ohne dass jedoch hiermit eine Beschränkung verbunden sein soll. So wäre es beispielsweise denkbar, die Werkzeuge der Messerspindel 9, wie schon angedeutet wurde, als über der Arbeitsbreite der Messerspindel 9 mehrfach umlaufende Messerwendeln auszubilden. Auch mehrere aneinander anschließende, gegenläufige Messerwendeln wären denkbar. Ebenso könnten die Messerwendeln natürlich auch mit umfangsseitigen Schneidzähnen versehen sein. Die dem gezeichneten Ausführungsbeispiel zugrunde liegenden Wankmesserscheiben 17 stellen demgegenüber jedoch sehr einfache und sinnfällige Bauteile dar, die kostengünstig z. B. als Stanzteile herstellbar sind.

## Patentansprüche

1. Mähwerk, insbesondere für einen Rasenmäher, mit einer liegend angeordneten, in Umfangsrichtung antreibbaren Messerspindel 9, die mit einem über ihre Arbeitsbreite durchgehenden, stationären Gegenmesser (10) zusammenwirkt, **dadurch gekennzeichnet, dass** die Messerspindel (9) mit mehreren, auf einer antreibbaren Welle (13) aufnehmbaren, gegenüber einer zur Wellenachse radialen Ebene gekippt angeordneten Wankmesserscheiben (17) versehen ist.

2. Mähwerk nach Anspruch 1, **dadurch gekennzeichnet, dass** der Kippwinkel der Wankmesserscheiben (17) gegenüber einer Radialebene 10 ° bis 15 °, vorzugsweise 12 ° beträgt und dass vorzugsweise der axiale Abstand einander benachbarter Wankmesserscheiben (17) kleiner, vorzugsweise um die Scheibendicke kleiner, als ihre Projektion auf die Spindelachse ist.

3. Mähwerk nach einem der vorhergehenden Ansprüche, **dadurch gekennzeichnet, dass** einander benachbarte Wankmesserscheiben (17) um jeweils 90 ° gegeneinander verdreht angeordnet sind.

4. Mähwerk nach einem der vorhergehenden Ansprüche, **dadurch gekennzeichnet, dass** die Messerspindel (9) eine zu ihrer Mitte symmetrische Werkzeuganordnung aufweist.

5. Mähwerk nach einem der vorhergehenden Ansprüche, **dadurch gekennzeichnet, dass** die Wankmesserscheiben (17) mit umfangsseitigen, vorzugsweise einen positiven Schnittwinkel aufweisenden Schneidzähnen (18 bzw. 21) versehen sind, wobei vorzugsweise die Anzahl der Schneidzähne (18 bzw. 21) am Umfang der Wankmesserscheiben (17) zumindest deren Projektion auf die Spindelachse geteilt durch die Scheibendicke entspricht.

6. Mähwerk nach Anspruch 5, **dadurch gekennzeichnet, dass** die Schneidzähne (18) als durch umfangsseitige, gegenüber einer Radialen geneigte Schnitte (19) hergestellte Zungen (20) ausgebildet sind, die gegenüber der Scheibenebene geschränkt sind, wobei das Schrankmaß höchstens der Scheibendicke, vorzugsweise 80% der Scheibendicke, entspricht und wobei die Schrankrichtung der Schneidzähne (18) aneinander anschließender Umfangshälften gegenläufig ist.

7. Mähwerk nach einem der vorhergehenden Ansprüche 1 bis 5, **dadurch gekennzeichnet, dass** die Wankmesserscheiben (17) zur Bildung der Schneidzähne (21) mit umfangsseitig offenen, gegenüber der Öffnung kontinuierlich nach innen sich erweiternden Ausnehmungen (22) versehen sind, die vorzugsweise eine kreisabschnittförmige Kontur, die mehr als einen Halbkreis umfasst, aufweisen.

8. Mähwerk nach einem der vorhergehenden Ansprüche, **dadurch gekennzeichnet, dass** die Wankmesserscheiben (17) jeweils zwischen einander gegenüberliegenden, auf der Welle (13) aufnehmbaren Stützringen (24) aufnehmbar sind, die entsprechend der Neigung der zugeordneten Wankmesserscheibe (17) geneigte Stirnflächen (25) aufweisen, wobei vorzugsweise die äußeren Stützringe als Kragen (27) eines auf der Welle (13) drehschlüssig aufnehmbaren Antriebsrad (14) bzw. als Unterlage einer im Bereich des anderen Wellenendes vorgesehenen Spannschraube (29) ausgebildet sind und wobei vorzugsweise im Bereich der Stirnflächen (25) der Stützringe (24) jeweils wenigstens ein Mitnehmerzapfen (31) vorgesehen ist, der zum Eingriff mit einer zugeordneten Ausnehmung (32) der anliegenden Wankmesserscheibe (17) bringbar ist.

9. Mähwerk nach einem der vorhergehenden Ansprüche, **dadurch gekennzeichnet, dass** die Welle (13) der Messerspindel (9) einen von der Kreisform abweichenden, vorzugsweise zu den durch seinen Mittelpunkt gelegten Koordinatenachsen symmetrischen, vorzugsweise quadratischen Querschnitt aufweist.

10. Mähwerk, insbesondere für Rasenmäher, mit einer liegend angeordneten, in Umfangsrichtung antreibbaren Messerspindel (9), die mit einem über ihre Arbeitsbreite durchgehenden, stationären Gegenmesser (10) zusammenwirkt, **dadurch gekennzeichnet, dass** die Messerspindel (9) mit wenigstens einem umfangsseitigem, als Messerwendel ausgebildeten Werkzeug versehen ist, wobei die Steigung der Messerwendel kleiner als die Arbeitsbreite der Messerspindel (9) ist und über der Arbeitsbreite der Messerspindel (9) mehrere Wendelumläufe vorgesehen sind.
